Europäisches Patentamt

European Patent Office

Office européen des brevets

(19)

(11) Veröffentlichungsnummer: **0 387 573**
A1

(12) **EUROPÄISCHE PATENTANMELDUNG**

(21) Anmeldenummer: 90103637.6

(22) Anmeldetag: 25.02.90

(51) Int. Cl.⁵: **H01F 1/11, G11B 5/706, G06K 19/08**

(30) Priorität: **11.03.89 DE 3907914**

(43) Veröffentlichungstag der Anmeldung:
**19.09.90 Patentblatt 90/38**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Meisen, Ulrich, Dr.**
**Breslauer Strasse 3**
**D-4150 Krefeld 11(DE)**
Erfinder: **Eiling, Aloys, Dr.**
**Schmiedestrasse 12**
**D-4630 Bochum 6(DE)**

(54) **Feinteilige magnetische Hexaferrite mit geringer Temperaturabhängigkeit der Koerzitivkraft sowie deren Verwendung.**

(57) Die vorliegende Erfindung betrifft feinteilige magnetische Hexaferritpigmente der allgemeinen Zusammensetzung

$M(I)_x Mg_y Ti_z Fe_{12-(y+z)} O_{19}$

wobei

$0,5 < = x < 1,3, \ 0,1 < = (y+z) < = 3, \ (x+y+z) > = 1,0$

und

$0,0 < = y < = 1,5$

$0,0 < = z < = 1,5$

und

M(I): Ba, Sr, Pb, Ca bedeuten,

sowie deren Verwendung.

EP 0 387 573 A1

# Feinteilige magnetische Hexaferrite mit geringer Temperaturabhängigkeit der Koerzitivkraft sowie deren Verwendung

Die vorliegende Erfindung betrifft feinteilige magnetische Hexaferritpigmente der allgemeinen Zusammensetzung

$$M(I)_x Mg_y Ti_z Fe_{12-(y+z)} O_{19}$$

wobei

$0,5 <\ = x < 1,3,\ 0,1 <\ = (y+z) <\ = 3,\ (x+y+z) >\ = 1,0$

und

$0,0 <\ = y <\ = 1,5$

$0,0 <\ = z <\ = 1,5$

und

M(I): Ba, Sr, Pb, Ca bedeuten,

sowie deren Verwendung.

Hexaferrite weisen Koerzitivfeldstärken auf, wie sie für die hochdichte magnetische Speicherung benötigt werden (45 - 120 kA/m). Insbesondere zeichnen sich durch eine durch Metalldotierung variabel einstellbare Koerzitivkraft ($iH_c$) im Bereich von 500-5500 Oe (39.785-437.6 kA/m) aus. Sie sind Metallpigmenten in ihrer Korrosionsstabilität und $CrO_2$ und Co-dotierten Eisenoxidpigmenten in ihrer Thermostabilität überlegen. Derartige Hexaferritpigmente mit Magnetoplumbit (M)-Struktur wurden für oben genannte Zwecke vorgeschlagen.

In der DE-A 3 732 116 wird beispielsweise die Verwendung eines Strontiumferrits zur Herstellung von Siebdruckfarben, die ein Bindemittel und ein magnetisierbares Pigment enthalten, beschrieben.

Für die Anwendung in Sicherheitsmarkierungen, beispielsweise auf Scheckkarten oder Banknoten, werden feinteilige gut dispergierbare magnetische Materialien benötigt, die eine derart hohe Koerzitivkraft aufweisen, daß sie durch üblicher Permanentmagnete nicht gelöscht werden können.

Für handelsübliche Tickets, beispielsweise Fahrkarten, werden derzeit konventionelle magnetische Eisenoxide eingesetzt. Derartige Produkte sind jedoch aufgrund ihrer geringen Koerzitivkraft leicht mit kommerziell erhältlichen Permanentmagneten zu fälschen.

Für fälschungssichere magnetische Medien wird die Verwendung gemahlener Hartferrite in den DE-A 3 630 113 und DE-A 3 732 116 vorgeschlagen. Derartige Produkte weisen jedoch eine sehr breite Teilchengrößenverteilung auf. Sie bestehen teilweise aus derart großen Teilchen, daß die Größe von magnetischen Eindomänen überschritten wird. Das hat zur Folge, daß die Koerzitivkraft sinkt und ein aufgezeichnetes Signal verzerrt wiedergegeben wird. Weiterhin sind derart große Materialien nur sehr schwer und unter hohen Kosten (bedingt durch lange Mahldauer bei der Lackherstellung) zu verarbeiten.

Zur Herstellung von Banknoten mit feinen aufgedruckten magnetischen Wasserzeichen sind die bekannten Hartferrite aufgrund ihrer zu hohen mittleren Teilchengröße ungeeignet. Es ist deshalb Ziel der Erfindung, Bariumferrite zur Verfügung zu stellen, die die beschriebenen Nachteile nicht aufweisen.

Überraschenderweise konnten nun Hexaferrite bereitgestellt werden, die die beschriebene Nachteile nicht aufweisen.

Gegenstand dieser Erfindung sind eine feinteilige magnetisch Hexaferrite der Zusammensetzung

$$M(I)_x Mg_y Ti_z Fe_{12-(y+z)} O_{19}$$

wobei

$0,5 <\ = x < 1,3,\ 0,1 <\ = (y+z) <\ = 3,\ (x+y+z) >\ = 1,0$

und

$0,0 <\ = y <\ = 1,5$

$0,0 <\ = z <\ = 1,5$

und

M(I): Ba, Sr, Pb, Ca bedeuten,

dadurch gekennzeichnet, daß sie eine Temperaturabhängigkeit der Koerzitivkraft ($iH_c$) von 0,0 bis 160 A/m/K im Bereich von 20-100 °C aufweisen.

Die erfindungsgemäßen Hexaferrite sind nach bekannten Verfahren herstellbar, z.B. nach der EP-A 230 505.

Gegenstand dieser Erfindung ist auch somit insbesondere die Verwendung dieser Hexaferritpigmente in magnetischen Aufzeichnungsträgern. Ebenso können sie für schwer löschbare magnetische Markierungen und Banknoten verwendet werden.

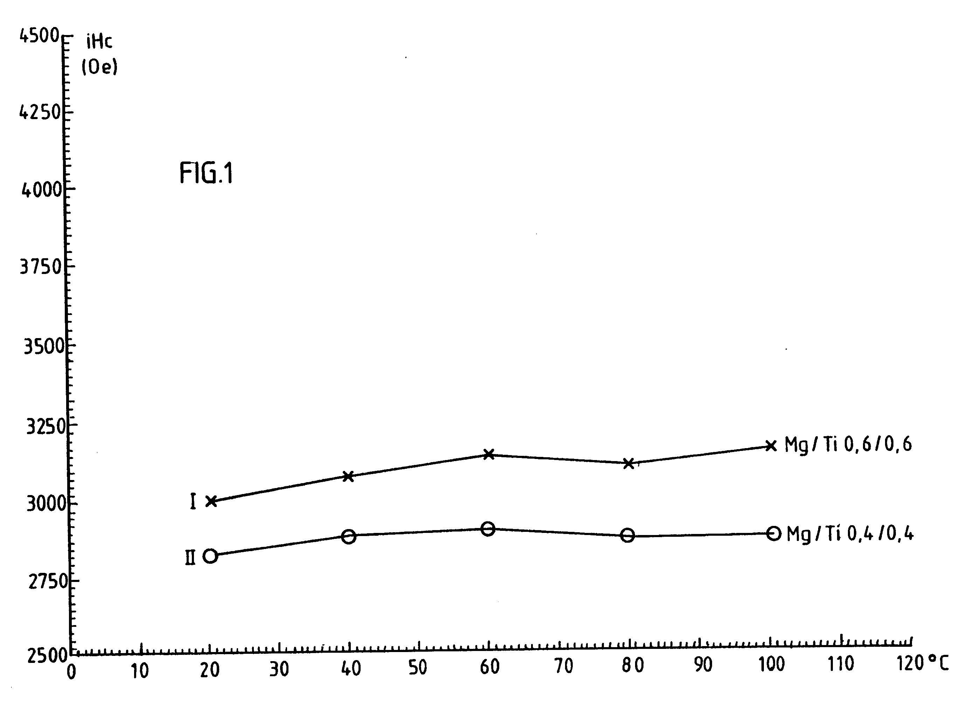

In Fig. 1 ist der Verlauf der Koerzitivkraft in Abhängigkeit von der Temperatur eines Bariumferrits der Zusammensetzung

$Ba_{1,1}Mg_{0,6}Ti_{0,6}Fe_{10,8}O_{19}$ (I)

und die Temperaturabhängigkeit der $iH_c$ eines Bariumferrites der Zusammensetzung

$Ba_{1,1}Mg_{0,4}Ti_{0,4}Fe_{11,2}O_{19}$ (II)

dargestellt.

Die folgenden Beispiele sollen die Erfindung verdeutlichen, ohne sie jedoch einzuschränken, insbesondere wird der Fachmann durch Variation der Menge und der Art der Metallionen und der Herstellungsbedingungen im Rahmen dieser Erfindung jede gewünschte Zusammensetzung mühelos erhalten können.

Beispiele

Beispiel 1

| $Ba_{1,1}Mg_{0,6}Ti_{0,6}Fe_{10,8}O_{19}$ | | | | | |
|---|---|---|---|---|---|
| Nr. | NH₄Fe Citrat | MgCO₃ | BaCO₃ | TiO-Citrat | Citronensäure | Ethandiol |
| 1 | 1122.0 | 10.4 | 40.33 | 62.55 | 59.9 | 121.4 |
| alle Angaben in Gramm | | | | | |

MgCO₃ (26.0 % Mg), Tio-Citratlösung (8,52 % Ti), NH₄FeCitrat (9,96 % Fe) alle anderen Chemikalien: Chemisch rein

Das Ammoniumeisencitrat wird in 1,2 l Wasser gelöst, die Lösung auf 80°C unter Rühren aufgeheizt und MgCO₃, BaCO₃, Citronensäure, TiO-Citrat und Ethandiol werden zugegeben. Dann wird eine Stunde bei 80°C gerührt und am Rotationsverdampfer so weit eingeengt, daß der Eisengehalt der Lösung 10 % beträgt. Die eingeengte Lösung wird in einem Kammerofen bei 220°C unter Luftzutritt getrocknet und pyrolysiert. Das Produkt wird in zwei Teile geteilt und bei 825°C 105' (/A) und bei 875°C (/B) in einem Drehrohrofen geglüht. Der hierbei entstehende hexagonale Ferrit hatte folgende Eigenschaften:

| Nr. | $iH_c$ (kA/m) | Ms/rho (nTm³/g) | Mr/rho (nTm³/g) | T-Abhängigkeit (A/m/K) |
|---|---|---|---|---|
| 1 | 243.5 | 79.9 | 40.9 | 159.1 |

Beispiel 2

| $Ba_{1,1}Mg_{0,4}Ti_{0,4}Fe_{11,2}O_{19}$ | | | | | |
|---|---|---|---|---|---|
| Nr. | NH₄Fe Citrat | MgCO₃ | BaCO₃ | TiO-Citrat | Citronensäure | Ethandiol |
| 1 | 1122.0 | 6.68 | 38.89 | 40.19 | 50.87 | 121.4 |

Die Herstellung erfolgt wie im Beispiel 1.

Der hierbei entstehende hexagonale Ferrit hatte folgende Eigenschaften:

| Nr. | iH$_C$ (kA/m) | Ms/rho (nTm$^3$/g) | Mr/rho (nTm$^3$/g) | T-Abhängigkeit (A/m/K) |
|-----|------|------|------|------|
| 2 | 215.5 | 71.1 | 36.4 | 55.7 |

## Ansprüche

1. Feinteilige magnetische Hexaferrite der Zusammensetzung:
$M(I)_xMg_yTi_zFe_{12-(y+z)}O_{19}$ wobei
$0,5 <= x <= 0$ 1,3, $0,1 <= (y+z) <= 3$,
$(x + y + x) >= 1,0$ und
$0,0 <= y <= 1,5$
$0,0 <= z <= 1,5$
und
M(I): Ba, Sr, Pb, Ca,
M(II): Ti, Zr, Hf, V, Nb, Ta bedeuten
dadurch gekennzeichnet, daß sie eine Temperaturabhängigkeit der Koerzitivkraft (iH$_c$) von 0.0 bis 160 A/m/K im Bereich von 20 - 100° C aufweisen.

2. Verwendung der magnetischen Hexaferrite gemäß Anspruch 1 für schwer löschbare magnetische Markierungen und Banknoten.

3. Verwendung der magnetischen Hexaferritpigmente gemäß Anspruch 1 als magnetisches Aufzeichnungsmaterial.

FIG.1

EP 0 387 573 A1

| | | Nummer der Anmeldung |
|---|---|---|
| **EUROPÄISCHER TEILRECHERCHENBERICHT,** der nach Regel 45 des Europäischen Patent- übereinkommens für das weitere Verfahren als europäischer Recherchenbericht gilt | Europäisches Patentamt | EP 90 10 3637 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 186 603 (CENTRE NATIONAL DE LA RECHERCHE SCIENTIFIQUE)<br>* Ansprüche 1,7,8,11 *<br>-- | 1,3 | H 01 F 1/11<br>G 11 B 5/706<br>G 06 K 19/08 |
| A | EP-A-0 300 310 (BAYER AG.)<br>* Ansprüche 1,7; Spalte 1, Zeilen 22-29; Spalte 2, Zeilen 14-22 *<br>-- | 1-3 | |
| A | EP-A-3 527 478 (DOWA MINING CO.)<br>* Anspruch 1; Seite 5, Zeile 30 - Seite 6, Zeile 4 *<br>---- | 1-3 | |
| | | | **RECHERCHIERTE SACHGEBIETE (Int. Cl.4)**<br><br>H 01 F<br>G 11 B |

## UNVOLLSTÄNDIGE RECHERCHE

Nach Auffassung der Recherchenabteilung entspricht die vorliegende europäische Patentanmeldung den Vorschriften des Europäischen Patentübereinkommens so wenig, daß es nicht möglich ist, auf der Grundlage einiger Patentansprüche sinnvolle Ermittlungen über den Stand der Technik durchzuführen.

Vollständig recherchierte Patentansprüche:

Unvollständig recherchierte Patentansprüche: 1-3

Nicht recherchierte Patentansprüche:

Grund für die Beschränkung der Recherche:

Die Recherche ist auf diese Zusammensetzung beschrankt und M(II) is nicht besichtet. Die Zusammensetzung $M(I)_x Mg_y Ti_z Fe_{12-(y+z)} O_{19}$ befasst nicht die weiter specifizierte Komponent M(II).

| Recherchenort | Abschlußdatum der Recherche | Prüfer |
|---|---|---|
| DEN HAAG | 17-05-1990 | DECANNIERE |